**Europäisches Patentamt**

**European Patent Office**

**Office européen des brevets**

(19)

(11) Veröffentlichungsnummer: **0 003 108**
**B1**

(12) # EUROPÄISCHE PATENTSCHRIFT

(45) Veröffentlichungstag der Patentschrift:
**15.09.82**

(21) Anmeldenummer: **79100023.5**

(22) Anmeldetag: **04.01.79**

(51) Int. Cl.³: **F 16 H  57/00,** C 21 C  5/50,
F 16 M  7/00

(54) **Drehmomentstütze für ein Getriebe, insbesondere für einen Konverterantrieb.**

(30) Priorität: **10.01.78  AT 160/78**

(43) Veröffentlichungstag der Anmeldung:
**25.07.79 Patentblatt 79/15**

(45) Bekanntmachung des Hinweises auf die Patenterteilung:
**15.09.82 Patentblatt 82/37**

(84) Benannte Vertragsstaaten:
**BE DE FR GB LU SE**

(56) Entgegenhaltungen:
**CH-A-450 091**
**DE-A-1 923 384**
**US-A-3 281 101**
**US-A-3 548 678**

(73) Patentinhaber: **VOEST-ALPINE Aktiengesellschaft,
Werksgelände, A-4010 Linz (AT)**

(72) Erfinder: **Riegler, Ernst, Grollerstrasse 5, A-4470 Enns
(AT)**
Erfinder: **Schmidt, Manfred, Heilhamerstrasse 5,
A-4020 Linz (AT)**

(74) Vertreter: **Glawe, Richard, Dr. et al, Postfach 37,
D-8000 München 26 (DE)**

# Drehmomentenstütze für ein Getriebe, insbesondere für einen Konverterantrieb

Die Erfindung betrifft eine Drehmomentenstütze für ein um eine Schwenkachse beweglich gelagertes Getriebe, insbesondere für einen Konverterantrieb, wobei das Getriebegehäuse gegen das Fundament beiderseits der Schwenkachse mit einer elastischen Abstützeinrichtung abgestützt ist.

Eine Drehmomentenstütze dieser Art ist aus der US-PS 3 548 678 für Konverterantriebe bekannt. Diese Drehmomentenstütze weist zwischen einem das Getriebegehäuse abstützenden Kolben und dem Fundament angeordnete elastische Abstützeinrichtungen auf, wie beispielsweise Gummiplatten, durch die während des Betriebes auftretende Stöße elastisch aufgenommen werden. Nachteilig bei dieser bekannten Drehmomentenstütze ist jedoch, daß das Getriebegehäuse nach Einschalten des Kippantriebes entsprechend der Elastizität der Gummiplatten eine andauernde Schräglage einnimmt. Dabei treten horizontal gerichtete und unvorherbestimmbare Kraftkomponenten auf, durch die die Kolben und die Gummiplatten zusätzlich zu den vertikalen, sich aus Stoßkräften und dem zu übertragenden Drehmoment ergebenden Kräften beansprucht werden. Auch ist, wenn das Getriebegehäuse infolge eines Drehmomentes bereits schräg steht und die elastische Abstützeinrichtung bis zur Grenze ihrer Belastbarkeit beansprucht ist, ein weiteres Abfedern von Stößen nicht mehr möglich; die Stöße beanspruchen dann direkt das Getriebe. Durch die Schräglage des Getriebes ist weiters die Gefahr eines Trockenlaufens der Vorgelege gegeben, da diese in der Regel nur mit einer Tauchschmierung ausgerüstet sind.

Die Erfindung bezweckt die Vermeidung dieser Nachteile und Schwierigkeiten und stellt sich die Aufgabe, eine Drehmomentenstütze der eingangs beschriebenen Art zu schaffen, durch die trotz der elastischen Abstützung eine Horizontallage des Getriebes während seines Betriebes gewährleistet ist. Zu Schrägstellungen des Getriebes soll es nur infolge von Stoßbelastungen, wie sie beispielsweise beim Einschalten des Getriebes auftreten, kommen. Solche Schrägstellungen sollten jedoch nur während des Einwirkens der Stoßkräfte auftreten, wogegen nach einer kurzen Zeitspanne wieder die horizontale Betriebslage des Getriebes bei voller Drehmomentenübertragung einstellbar ist.

Diese Aufgabe wird erfindungsgemäß dadurch gelöst, daß als elastische Abstützeinrichtung ein mit Druckgas beaufschlagter Druckmittel-Kolbenzylinder vorgesehen ist, dessen Lage gegenüber dem Fundament mittels einer Stelleinrichtung verstellbar ist, und daß Fühlermittel zum Feststellen einer Abweichung des Getriebegehäuses von der Horizontallage sowie davon beeinflußte Übertragungsmittel zur Steuerung der Stelleinrichtung vorgesehen sind.

Eine vorteilhafte Ausführungsform ist dadurch gekennzeichnet, daß der Kolben des Druckmittel-Kolbenzylinders als schwimmender Doppelkolben ausgebildet ist, wobei das eine Ende des Kolbens, das dem mit Druckgas beaufschlagbaren Zylinder gegenüberliegend angeordnet ist, in einem von Hydraulikflüssigkeit beaufschlagbaren Zylinder geführt ist, wobei durch Veränderung der Flüssigkeitsmenge im Hydraulikzylinder der Kolben gegenüber dem Fundament verstellbar ist.

Zweckmäßig sind mindestens zwei in einer Vertikalebene senkrecht zur Schwenkachse und im Grundriß symmetrisch zur Schwenkachse angeordnete Druckmittel-Kolbenzylinder vorgesehen, die mindestens eine die Zylinder verbindende Ausgleichsleitung aufweisen, wobei vorteilhaft die Zylinder durch zwei Ausgleichsleitungen mit je einem in entgegengesetzter Richtung wirkenden Rückschlagventil leitungsmäßig verbunden sind, wobei die Leitungen jeweils unterhalb der oberen Endlage der Kolben in den Zylinder einmünden.

Zur Ermöglichung einer vollautomatisch gesteuerten Arbeitsweise der Drehmomentenstütze ist nach weiterer Ausgestaltung der Erfindung am Getriebegehäuse ein Nivellier-Schalter in der durch die Schwenkachse gelegten Vertikalebene angeordnet, der bei Abweichungen der Lage des Getriebegehäuses von der horizontalen Soll-Lage ein Ventil in einer Leitung öffnet, die hydraulisches Medium in den Hydraulikzylinder einspeist, wobei der Kolben unter Erhöhung des Druckes im Gaszylinder verschiebbar und als Folge davon das Gehäuse rückdrehbar ist, bis die horizontale Soll-Lage wieder erreicht ist.

Es ist weiters zweckmäßig, wenn eine Ruheposition des Kolbens im Hydraulikzylinder durch einen Positionsgeber markiert ist und wenn der Hydraulikzylinder ein druckabhängiges Ventil in einer Rücklaufleitung aufweist, wobei der Positionsgeber und das druckabhängige Ventil durch eine Steuerleitung verbunden sind.

Zur Aufnahme von horizontalen Kraftkomponenten an der Drehmomentenstütze, wie sie auch bei kleinsten Schrägstellungen auftreten, können die Druckmittel-Kolbenzylinder an ihrem oberen Ende sphärisch ausgebildete Abschnittsflächen aufweisen, die gegebenenfalls mit Bronze oder einer PTFE-Auflage beschichtet sind.

Zweckmäßig ist eine Pumpe für das hydraulische System mittels einer den Getriebe-Antrieb ansteuernden Ein- und Ausschaltevorrichtung nur gemeinsam ein- und ausschaltbar.

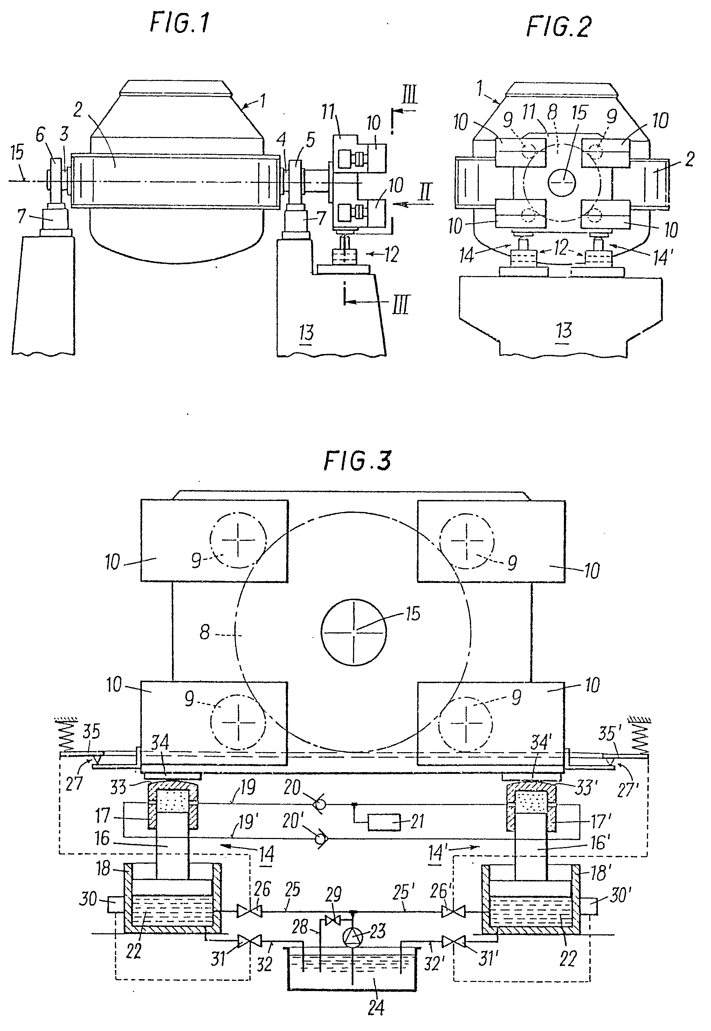

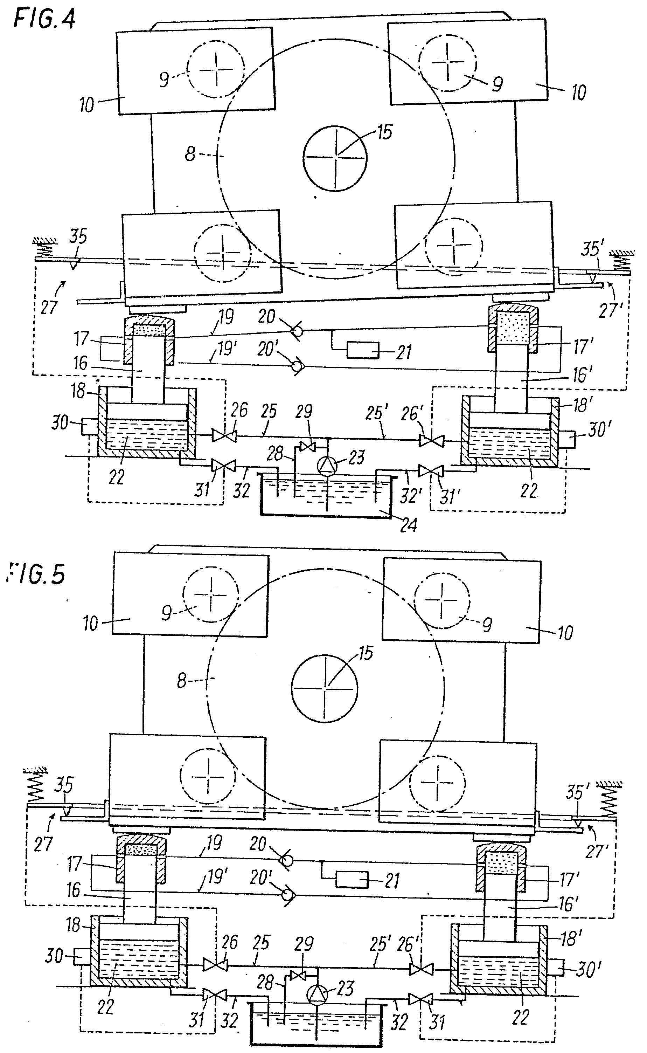

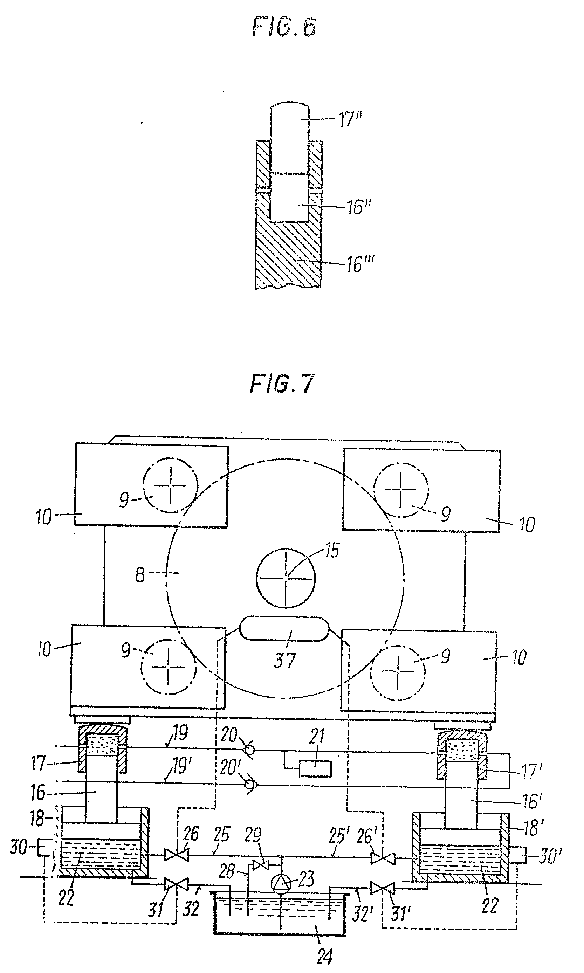

Die Erfindung ist anhand mehrerer Ausführungsformen in der Zeichnung näher erläutert, worin Fig. 1 eine Seitenansicht und Fig. 2 eine Stirnansicht eines Konverters in schematischer Darstellung zeigen. In Fig. 3 ist die Drehmomentenstütze im Schnitt gemäß der Linie III-III der Fig. 1 ebenfalls in schematischer Darstellung gezeigt. Die Fig. 4 und 5 veranschaulichen in zu

Fig. 3 analoger Darstellung die Betriebsweise der in Fig. 3 dargestellten Ausführungsform der Drehmomentenstütze. In Fig. 6 ist ein Detail einer abgeänderten Ausführungsform einer Drehmomentenstütze dargestellt. Fig. 7 veranschaulicht in zu Fig. 3 analoger Darstellung eine weitere abgeänderte Ausführungsform.

Mit 1 ist ein Konverter bezeichnet, der in einem Tragring 2 eingesetzt ist. Der Tragring ist mit Tragzapfen 3 und 4 in einem Festlager 5 und in einem Loslager 6 kippbar gelagert; die Lager 5 und 6 sind auf Lagerstützen 7 montiert. Der Tragzapfen 4 ist über das Lager 5 hinaus verlängert ausgebildet und trägt an seinem Ende ein Großrad 8, welches durch vier um seinen Umfang verteilt angeordnete Ritzel 9 antreibbar ist. Die Ritzel sind mitsamt ihren Vorgelegen und Antrieben 10 an einem Getriebegehäuse 11, welches das Großrad umschließt und welches am Tragzapfen 4 schwenkbar gelagert ist, befestigt. Das Getriebegehäuse 11 ist unter Zwischenschaltung einer Drehmomentenstütze, die allgemein mit 12 bezeichnet ist, am Fundament 13 abgestützt.

Die Drehmomentenstütze weist zwei Stützeinheiten 14, 14' auf, die beiderseits der durch die Schwenkachse 15 gelegten Vertikalebene und symmetrisch zu ihr vorgesehen sind. Jede Stützeinheit weist einen mit seiner Längsachse vertikal angeordneten Doppelkolben 16, 16' auf, dessen oberes Ende jeweils von einem Zylinder 17, 17' umgeben ist, und dessen unteres Ende, welches eine gegenüber dem oberen Ende vergrößerte Fläche besitzt, jeweils in einem am Fundament 13 starr befestigten Zylinder 18, 18' vertikal beweglich geführt ist. Dadurch ist jeder der Kolben 16, 16' zwischen den Zylindern 17, 18 bzw. 17', 18' schwimmend angeordnet. Die Zylinder 17, 17' sind mit Druckluft gefüllt und stehen miteinander über zwei Ausgleichsleitungen 19, 19', deren jede mit einem Rückschlagventil 20, 20', die in entgegengesetzter Richtung wirken, ausgerüstet ist, in Verbindung. Eine der Ausgleichsleitungen ist zusätzlich mit einer nicht näher dargestellten Kompressoranlage und mit einem Windkessel 21 verbunden. Die Zylinder 18, 18' sind mit einer Hydraulikflüssigkeit 22 gefüllt, welche mittels einer Pumpe 23 aus einem Vorratsbehälter 24 über die Zuführleitungen 25, 25' eingespeist wird. Die Zuführleitungen 25, 25' sind mittels elektrisch betätigbarer Ventile 26, 26' absperrbar. Die Betätigung dieser Ventile 26, 26' erfolgt in Abhängigkeit von am Getriebegehäuse beiderseits der Schwenkachse 15 angeordneter Endschalter 27 , 27'. Sind die Ventile 26, 26' in den Zuführleitungen geschlossen oder fördert die Pumpe 23, die während des Betriebes des Kippantriebes stets in Betrieb ist, mehr, als in die Zylinder 18, 18' einströmen gelassen wird, fließt die überschüssig geförderte Hydraulikflüssigkeit über die Leitung 28 und das Druckregelventil 29 wieder in den Vorratsbehälter 24 zurück. Jeder der Zylinder 18, 18' weist in einer vorbestimmten Höhe einen Positionsgeber 30, 30' für die Position der Kolben 16, 16' auf, durch welche Geber 30, 30' jeweils ein druckabhängiges Rücklaufventil 31, 31', welches in den vom Zylinder 18 bzw. 18' in den Vorratsbehälter 24 geführten Rücklaufleitungen 32, 32' vorgesehen ist, betätigbar ist.

Die Zylinder 17, 17' weisen jeweils an ihrer Oberseite eine sphärisch ausgebildete Fläche 33, 33' auf, die mit Bronze oder einer PTFE-Auflage versehen ist. Diese sphärische Fläche steht mit an der Unterseite des Getriebegehäuses 11 beiderseits und symmetrisch zur Schwenkachse 15 angeordneten gehärteten Stützplatten 34, 34' in Kontakt.

In Fig. 6 ist eine abgeänderte Ausführungsform dargestellt, bei der statt des Zylinders 17 gemäß Fig. 3 ein Kolben 17'' in eine Ausnehmung 16'' am oberen Ende eines Kolbens 16''' eingesetzt ist.

Die Funktion der erfindungsgemäßen Drehmomentenstütze ist nachfolgend erläutert:

Bei Inbetriebnahme des Getriebes kann zunächst aus dem Vorratsbehälter 24 mittels der Pumpe 23, falls eines der Ventile 26, 26' offen ist, und bei geschlossenen Rücklaufventilen 31, 31' Hydraulikflüssigkeit 22 in einen der Hydraulikzylinder 18 und 18' gepumpt werden. Die Pumpe 23 ist mit der Aus- und Einschaltevorrichtung für den elektrischen Antrieb des Getriebes in der Weise gekoppelt, daß sie stets gemeinsam mit dem Antrieb in Betrieb genommen wird, so daß bei Betätigung des Kippantriebes das hydraulische System unter Druck steht. Gleichzeitig mit der Inbetriebnahme wird Druckluft mittels der Kompressoranlage über den Windkessel 21 in die Druckluftzylinder 17, 17' eingeleitet, bis diese Zylinder mit ihren sphärischen Flächen 33, 33' an den gehärteten Stützplatten 34, 34' anliegen. Durch die Ausgleichsleitungen 19, 19' herrscht in beiden Zylindern 17, 17' der gleiche Druck.

In den betreffenden Hydraulikzylinder 18 bzw. 18' wird so lange Hydraulikflüssigkeit eingeleitet, bis der zugeordnete Endschalter 27 bzw. 27' geschlossen wird, wodurch das zugeordnete Ventil 26 bzw. 26' in die Schließstellung geschaltet wird. Die Hydraulikflüssigkeit wird sodann durch die Pumpe 23 über die Leitung 28 direkt in den Vorratsbehälter 24 gefördert. Die Zuführleitungen 25, 25' stehen jedoch weiterhin bis zu den Ventilen 26, 26' unter Druck.

Die Anordnung der Endschalter 27, 27' am Getriebegehäuse 11 ist so gewählt, daß im Augenblick des Schließens beider Endschalter das Getriebegehäuse horizontal ausgerichtet ist. Eine Bewegung des Getriebegehäuses nach oben bzw. nach unten, wie sie beispielsweise wegen Durchbiegung der Tragzapfen infolge des Konvertergewichtes auftritt, wird ohne Verlust des Kontaktes der sphärischen Flächen 33, 33' mit den entsprechenden Stützplatten 34, 34' ermöglicht, indem der Druck in den Druckluftzylindern 17 bzw. 17' so groß gewählt wird, daß auch noch bei maximal angehobenem Getriebegehäuse ein Kontakt der Druckluftzylinder mit dem Getriebegehäuse sichergestellt ist. Die Kontaktbügel 35 und 35' werden gegenüber dem Fundament federnd nach unten gepreßt, so daß beide Endschalter 27, 27' auch bei angehobenem oder abgesenktem Getriebegehäuse 11, sofern sich dieses in Horizontallage befindet, stets geschlossen bleiben. Die Kontaktbügel 35, 35' führen, jedoch eine Vertikalbewegung aufgrund einer gestrichelt dargestellten Koppelung stets nur synchron aus, d. h. sie befinden sich stets auf gleicher Höhe. Dadurch, daß beide Kontaktbügel 35, 35' federnd nach unten gepreßt werden, ist stets (z. B. bei aus der horizontalen Soll-Lage verschwenktem Getriebegehäuse) mindestens ein Endschalter geschlossen, wobei sich der Kontaktbügel des dem geschlossenen Endschalter gegenüberliegenden Endschalters stets in gleicher Höhe befindet wie der Kontaktbügel des geschlossenen Endschalters.

Wird der Konverter 1 gekippt, beispielsweise gemäß der Ansicht der Fig. 3 im Uhrzeigersinn, wird durch die dem Antriebsmoment entgegenwirkenden Reaktionskräfte das Getriebegehäuse entgegen dem Uhrzeigersinn um die Schwenkachse 15, wie in Fig. 4 stark übertrieben dargestellt ist, verschwenkt. Die Stützplatte 34 drückt dann auf den Zylinder 17, welcher dadurch nach unten bewegt wird. Der Zylinder 17' hingegen wird durch die expandierende Druckluft nach oben bewegt. Die Ausgleichsleitungen 19, 19' münden in einer solche Höhe in die Zylinder 17, 17', daß, wenn einer der Zylinder 17, 17' gegen den Kolben 16 bzw. 16' gepreßt wird, die Einmündungen der Ausgleichsleitungen durch den entsprechenden Kolben 16 bzw. 16' abgesperrt werden, so daß ein Restdruckluftvolumen übrig bleibt, welches über die Ausgleichsleitungen nicht entweichen kann. Dadurch wird ein Aufsetzen der Zylinder 17, 17' auf den Kolben 16, 16' verhindert. Wie aus Fig. 4 ersichtlich ist, ist der Endschalter 27 geöffnet, wogegen der Endschalter 27' durch federnde Mitnahme des Kontaktbügels 35' geschlossen bleibt. Das Öffnen des Endschalters 27 bewirkt ein Öffnen des Ventils 26, wodurch Hydraulikflüssigkeit in den Hydraulikzylinder 18 einströmen kann, und zwar so lange, bis der Kolben 16 so weit nach oben bewegt worden ist, bis wieder der Kontakt am Endschalter 27 geschlossen ist. Dies ist dann der Fall, wenn das Getriebegehäuse wieder seine horizontale Betriebsposition erreicht hat, wie in Fig. 5 dargestellt ist. In dieser in Fig. 5 dargestellten Lage verbleibt das Getriebegehäuse so lange, wie das Drehmoment einwirkt.

Bei Umkehr der Drehrichtung bzw. bei Abschalten des Antriebes sinkt der Druck im Hydraulikzylinder 18 auf einen Minimalwert, wodurch das druckabhängige Rücklaufventil 31 geöffnet wird und Hydraulikflüssigkeit über die Rücklaufleitung 32 in den Vorratsbehälter zurückfließt. Es bleibt so lange geöffnet, bis der Kolben 16 die Höhe des Positionsgebers 30 erreicht, welcher Positionsgeber sodann ein Schließen des Rücklaufventils 31 bewirkt. Die horizontale Lage des Getriebegehäuses ist somit weiterhin sichergestellt.

ES ist bei entsprechender Dimensionierung der erfindungsgemäßen Drehmomentenstütze möglich, die Verschwenkung des Getriebes aus der horizontalen Soll-Lage auf maximal ±1° zu beschränken.

Die beiden Endschalter 27, 27' sind zweckmäßig zu einem einzigen doppeltwirkenden Nivellier-Schalter 37 zusammengefaßt, beispielsweise einem Quecksilber-Elektrodenschalter, dessen Kontaktgabe von seiner jeweiligen von der Horizontalen abweichenden Kipplage abhängt. Ein in Fig. 7 dargestellter Schalter dieser Art, der am Getriebegehäuse in der durch die Schwenkachse 15 gelegten Vertikalebene befestigt ist, zeigt Abweichungen des Getriebegehäuses von der Horizontallage nach beiden Richtungen an und betätigt in gleicher Weise wie die Endschalter 27, 27' entsprechend der Neigungsrichtung des Getriebegehäuses eines der Ventile 26, 26'.

Die Erfindung beschränkt sich nicht auf mehrritzelige Konverterantriebe, sie kann auch bei Antrieben mit nur einem Ritzel verwirklicht werden. Weiters ist es möglich, die Erfindung für Getriebe einzusetzen, die nicht um eine bestimmte, räumlich festgelegte Achse schwenkbar sind, wie beispielsweise für Getriebe, die mittels Lenker am Fundament angelenkt sind.

## Patentansprüche

1. Drehmomentenstütze für ein um eine Schwenkachse beweglich gelagertes Getriebe, insbesondere für einen Konverterantrieb, wobei das Getriebegehäuse gegen das Fundament beiderseits der Schwenkachse mit einer elastischen Abstützeinrichtung abgestützt ist, dadurch gekennzeichnet, daß als elastische Abstützeinrichtung ein mit Druckgas beaufschlagter Druckmittel-Kolbenzylinder (16, 17; 16', 17') vorgesehen ist, dessen Lage gegenüber dem Fundament mittels einer Stelleinrichtung (16, 18; 16', 18') verstellbar ist, und daß Fühlermittel (27, 27'; 35, 35', 37) zum Feststellen einer Abweichung des Getriebegehäuses (11) von der Horizontallage sowie davon beeinflußte Übertragungsmittel (26, 26') zur Steuerung der Stelleinrichtung vorgesehen sind.

2. Drehmomentenstütze nach Anspruch 1, dadurch gekennzeichnet, daß der Kolben (16, 16') des Druckmittel-Kolbenzylinders (16, 17; 16', 17') als schwimmender Doppelkolben ausgebildet ist, wobei das eine Ende des Kolbens, das dem mit Druckgas beaufschlagbaren Zylinder (17, 17') gegenüberliegend angeordnet ist, in einem von Hydraulikflüssigkeit beaufschlagbaren Zylinder (18, 18') geführt ist, wobei durch Veränderung der Flüssigkeitsmenge im Hydraulikzylinder (18, 18') der Kolben (16, 16') gegenüber dem Fundament (13) verstellbar ist.

3. Drehmomentenstütze nach Anspruch 1 oder 2, dadurch gekennzeichnet, daß mindestens zwei in einer Vertikalebene senkrecht zur Schwenkachse (15) und im Grundriß symmetrisch zur Schwenkachse angeordnete Druckmittel-Kolbenzylinder (16, 17; 16', 17') vorgesehen sind, die mindestens eine die Zylinder (17, 17') verbindende Ausgleichsleitung aufweisen.

4. Drehmomentenstütze nach Anspruch 3, dadurch gekennzeichnet, daß die Zylinder (17, 17') durch zwei Ausgleichsleitungen (19, 19') mit je einem in entgegengesetzter Richtung wirkenden Rückschlagventil (20, 20') leitungsmäßig verbunden sind, wobei die Leitungen (19, 19') jeweils unterhalb der oberen Endlage der Kolben (16, 16') in die Zylinder (17, 17') einmünden.

5. Drehmomentenstütze nach den Ansprüchen 2 bis 4, dadurch gekennzeichnet, daß am Getriebegehäuse (11) ein Nivellier-Schalter (37) in der durch die Schwenkachse (15) gelegten Vertikalebene angeordnet ist, der bei Abweichungen der Lage des Getriebegehäuses (11) von der horizontalen Soll-Lage ein Ventil (26, 26') in einer Leitung (25, 25') öffnet, die hydraulisches Medium (22) in den zugehörigen Hydraulikzylinder (18, 18') einspeist, wobei der Kolben (16, 16') unter Erhöhung des Druckes im Gaszylinder (17, 17') verschiebbar und als Folge davon das Getriebegehäuse (11) rückdrehbar ist, bis die horizontale Soll-Lage wieder erreicht ist.

6. Drehmomentenstütze nach den Ansprüchen 2 bis 5, dadurch gekennzeichnet, daß eine Ruheposition des Kolbens (16, 16') im Hydraulikzylinder (18, 18') durch einen Positionsgeber (30, 30') markiert ist und daß der Hydraulikzylinder (18, 18') ein druckabhängiges Ventil (31, 31') in einer Rücklaufleitung (32, 32') aufweist, wobei der Positionsgeber (30, 30') und das druckabhängige Ventil (31, 31') durch eine Steuerleitung verbunden sind.

7. Drehmomentenstütze nach den Ansprüchen 3 bis 6, dadurch gekennzeichnet, daß die Druckmittel-Kolbenzylinder (16, 17; 16', 17') an ihrem oberen Ende sphärisch ausgebildete Abschnittsflächen (33, 33') aufweisen, die gegebenenfalls mit Bronze oder einer PTFE-Auflage beschichtet sind.

8. Drehmomentenstütze nach den Ansprüchen 2 bis 7, dadurch gekennzeichnet, daß eine Pumpe (23) für das hydraulische System mittels einer den Getriebe-Antrieb ansteuernden Ein- und Ausschaltevorrichtung nur gemeinsam ein- und ausschaltbar ist.

9. Drehmomentenstütze nach den Ansprüchen 3 bis 8, dadurch gekennzeichnet, daß in einer Ausgleichsleitung (19) zwischen den Druckmittel-Kolbenzylindern (16, 17; 16', 17') ein Windkessel (21) eingeschaltet ist.

**Claims**

1. Torque support for a gear mounted so as to be movable about a pivot axis, in particular for a converter drive, the gear casing being supported on the base on either side of the pivot axis by an elastic supporting arrangement, characterised in that, as elastic supporting arrangement, a pressure medium piston cylinder (16, 17; 16', 17') to which compressed gas is admitted is provided, whose position relative to the base is adjustable by means of an adjustment device (16, 18; 16', 18'), and that sensing means (27, 27'; 35, 35', 37) for detecting a deviation of the gear casing (11) from the horizontal position as well as transmission means (26, 26') thereby influenced for controlling the adjustment device are provided.

2. Torque support according to claim 1, characterised in that the piston (16, 16') of the pressure medium piston cylinder (16, 17; 16', 17') is designed as a floating double piston, the one end of the piston that is arranged opposite the cylinder (17, 17') to which compressed gas is admissible being guided in a cylinder (18, 18') to which hydraulic liquid is admissible, the piston (16, 16') being displaceable relative to the base (13) by changing the amount of liquid in the hydraulic cylinder (18, 18').

3. Torque support according to claim 1 or 2, characterised in that at least two pressure medium piston cylinders (16, 17; 16', 17') arranged in a vertical plane perpendicular to the pivot axis (15) and symmetrical to the pivot axis in ground section are provided, comprising at least one equalizing conduit connecting the cylinders (17, 17').

4. Torque support according to claim 3, characterised in that the cylinders (17, 17') are connected in a conduitlike manner by two equalizing conduits (19, 19') each including a non-return valve (20, 20') acting in opposite direction, the conduits (19, 19') each entering the cylinder (17, 17') below the upper end position of the pistons (16, 16').

5. Torque support according to claims 2 to 4, characterised in that on the gear casing (11) a levelling switch (37) is arranged in the vertical plane laid through the pivot axis (15), which, in case of deviations of the position of the gear casing (11) from the desired horizontal position, opens a valve (26, 26') in a conduit (25, 25') that feeds hydraulic medium (22) into the pertaining hydraulic cylinder (18, 18'), the piston (16, 16') being displaceable by increasing the pressure in the gas cylinder (17, 17') and the gear casing (11), as a result being turnable back until the desired horizontal position has been regained.

6. Torque support according to claims 2 to 5, characterised in that a resting position of the piston (16, 16') in the hydraulic cylinder (18, 18') is marked by a position transmitter (30, 30') and that the hydraulic cylinder (18, 18') comprises a pressure-dependent valve (31, 31') in a return conduit (32, 32'), the position transmitter (30, 30') and the pressure-dependent vale (31, 31') being connected by a control conduit.

7. Torque support according to claims 3 to 6, characterised in that the pressure medium piston cylinders (16, 17; 16', 17'), on their upper ends, have spherically designed limitation surfaces (33, 33'), which, if desired, are coated with bronze or with a PTFE layer.

8. Torque support according to claims 2 to 7, characterised in that a pump (23) for the hydraulic system is capable of being switched on and off only commonly by means of an on-and-off switching arrangement controlling the gear drive.

9. Torque support according to claims 3 to 8, characterised in that an air vessel (21) is interposed in an equalizing conduit (19) between the pressure medium piston cylinders (16, 17; 16', 17').

**Revendications**

1. Appui soumis à l'action d'un couple pour une transmission montée pour être mobile autour d'un axe de pivotement, en particulier pour un dispositif d'entraînement de convertisseur, le carter de la transmission étant appuyé sur la fondation, de part et d'autre de l'axe de pivotement, à l'aide d'un dispositif d'appui élastique, caractérisé en ce qu'est prévu comme dispositif d'appui élastique, un ensemble à cylindre et à piston et à agent sous pression (16, 17; 16', 17') soumis à un gaz sous pression, dont la position par rapport à la fondation est réglable au moyen d'un dispositif d'ajustement (16, 18; 16', 18') et en ce que sont prévus des moyens palpeurs (27, 27'; 35, 35', 37) pour la détection d'une déviation du carter (11) de la transmission par rapport à la position horizontale, ainsi que des moyens de transmission (26, 26') influencés par eux, pour la commande du dispositif d'ajustement.

2. Appui soumis à l'action d'un couple suivant la revendication 1, caractérisé en ce que le piston (16, 16') de l'ensemble à cylindre et à piston et à agent sous pression (16, 17; 16', 17') est réalisé en piston double flottant, l'une des extrémités du piston, qui est disposée à l'opposé du cylindre (17, 17') qui peut être sollicité par du gaz sous pression, est guidée dans un cylindre (18, 18') qui peut être sollicité par un liquide hydraulique, le piston (16, 16') étant déplaçable par rapport à la fondation (13) par changement de la quantité de liquide dans le cylindre hydraulique (18, 18').

3. Appui soumis à l'action d'un couple suivant la revendication 1 ou 2, caractérisé en ce que sont prévus au moins deux ensembles à cylindre et à piston et à agent sous pression (16, 17; 16', 17'), disposés dans un plan vertical perpendiculaire à l'axe de pivotement (15) et symétriquement en plan par rapport à l'axe de pivotement, ensembles qui présentent au moins un conduit de compensation reliant les cylindres (17, 17').

4. Appui soumis à l'action d'un couple suivant la revendication 3, caractérisé en ce que les cylindres (17, 17') sont reliés, par voie de conduits, par deux conduits de compensation (19, 19') avec chaque fois un clapet de non retour (20, 20') agissant en sens opposés, les conduits (19, 19') débouchant dans les cylindres (17, 17') chaque fois en dessous de la position de fin de course supérieure des pistons (16, 16').

5. Appui soumis à l'action d'un couple suivant les revendications 2 à 4, caractérisé en ce que sur le carter (11) de la transmission est disposé, dans le plan vertical passant par l'axe de pivotement (15), un commutateur (37) répondant au nivellement, qui ouvre, lors de déviations de la position du carter (11) de la transmission par rapport à la position horizontale de consigne, une valve (26, 26') dans un conduit (25, 25') qui introduit l'agent hydraulique (22) dans le cylindre hydraulique (18, 18') correspondant, le piston (16, 16') étant déplaçable avec élévation de la pression dans le cylindre à gaz (17, 17') et le carter (11) de la transmission pouvant, à la suite de cela, être ramené en arrière par pivotement jusqu'à ce que la position horizontale de consigne soit atteinte à nouveau.

6. Appui soumis à l'action d'un couple suivant les revendications 2 à 5, caractérisé en ce qu'une position de repos du piston (16, 16') dans le cylindre hydraulique (18, 18') est marquée par un indicateur de position (30, 30') et en ce que le cylindre hydraulique (18, 18') possède, dans un conduit de retour (32, 32') une valve (31, 31') dépendant de la pression, l'indicateur de position (30, 30') et la valve (31, 31') dépendant de la pression étant reliés par un conduit de commande.

7. Appui soumis à l'action d'un couple suivant les revendications 3 à 6, caractérisé en ce que les ensembles (16, 17; 16', 17') à cylindre, à piston et à agent sous pression présentent à leur extrémité supérieure des surfaces de délimitation (33, 33') de conformation sphérique, qui sont éventuellement revêtues de bronze ou d'une garniture de PTFE.

8. Appui soumis à l'action d'un couple suivant les revendications 2 à 7, caractérisé en ce qu'une pompe (23) pour le système hydraulique peut être mise en action ou hors d'action, en même temps seulement, à l'aide d'un dispositif de mise en action et de mise hors d'action commandant le dispositif d'entraînement de la transmission.

9. Appui soumis à l'action d'un couple suivant les revendications 3 à 8, caractérisé en ce qu'un réservoir à air (21) est inséré dans un conduit de compensation (19) entre les ensembles (16, 17; 16', 17') à cylindre et à piston et à agent sous pression.

FIG.1

FIG.2

FIG.3

FIG.4

0 003 108

FIG.5

# FIG.6

# FIG.7